(19) Europäisches Patentamt
European Patent Office
Office européen des brevets

(11) Publication number: 0 318 868 A1

# (12) EUROPEAN PATENT APPLICATION

(21) Application number: 88119705.7

(22) Date of filing: 25.11.88

(51) Int. Cl.4: C08F 222/40 , C08G 73/12 , C08F 212/34

Claims for the following Contracting State: ES.

(30) Priority: 27.11.87 US 125858

(43) Date of publication of application: 07.06.89 Bulletin 89/23

(84) Designated Contracting States: BE DE ES FR GB IT NL SE

(71) Applicant: HERCULES INCORPORATED
Hercules Plaza
Wilmington Delaware 19894(US)

(72) Inventor: Chu, Sun Gun
3530 Hopkins Road
Wilmington Delaware 19808(US)
Inventor: Jabloner, Harold
527 Cherry Street
Wilmington Delaware 19720(US)
Inventor: Nguyen, Tuyen Thanh
6008 Stone Pine Road The Pines
Wilmington Delaware 19808(US)

(74) Representative: Lederer, Franz, Dr. et al
Van der Werth, Lederer & Riederer
Patentanwälte Lucile-Grahn-Strasse 22
D-8000 München 80(DE)

## (54) Maleimide-based thermosettable resin compositions.

(57) Novel polyfunctional maleimide-based thermosettable resin compositions are provided which have improved processing capability and which comprise at least one polyfunctional maleimide compound and at least one alkenyl derivative of 2,2′-dihydroxybiphenyl.

EP 0 318 868 A1

# MALEIMIDE-BASED THERMOSETTABLE RESIN COMPOSITIONS

## Field of the Invention

This invention relates to novel polyfunctional maleimide-based thermosettable resin compositions having improved processing capability. This invention further relates to prepregs and composite materials manufactured from such resin compositions.

## Background of the Invention

Polyfunctional maleimide-based thermosettable resins, such as bismaleimide-based or polymaleimide-based resins, are known to have such properties as excellent heat resistance and high modulus. Such resins are thus particularly suited for use in applications such as impregnating resins for the manufacture of advanced fiber reinforced composites. In recent years, such composites have played a significant role for use in the production of primary, secondary and empennage structures for the aerospace industry in addition to applications in the automobile and electronics industry. The use of such resins, however, has presented processing difficulties, since most commercially available bismaleimides and polymaleimides are high melting solids, and thus are not readily melt processible before cure.

It is therefore an object of this invention to provide a novel polyfunctional maleimide-based thermosettable resin composition having improved processing capability. It is a further object of this invention to provide prepregs and composite materials manufactured from such resin compositions.

## Summary of the Invention

It has now been found that novel polyfunctional maleimide-based thermosettable resin compositions having improved processing capability can be provided by a composition comprising: (a) at least one polyfunctional maleimide compound and (b) at least one alkenyl derivative of 2,2′-dihydroxybiphenyl.

This inventicn is further illustrated by the following detailed description.

## Detailed Description of the Invention

In accordance with the present invention, a thermosettable resin composition is provided which comprises: (a) at least one polyfunctional maleimide compound having the following general formulas:

(1) 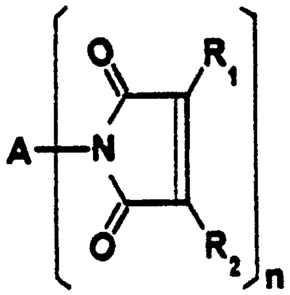 ,

(2) 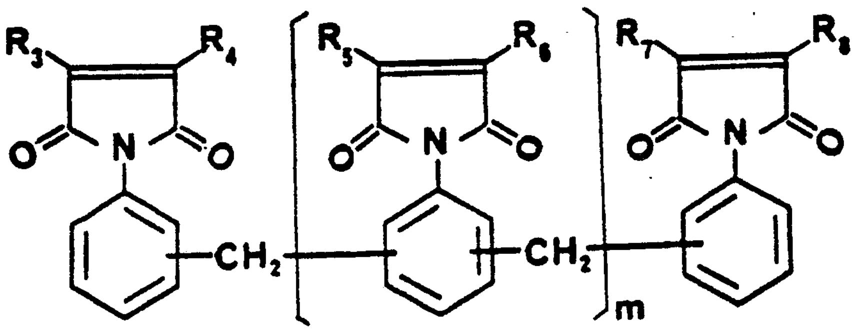 ,

where A represents a divalent, trivalent or tetravlent organic radical of at least two carbon atoms, or a direct bond, and $R_1$-$R_8$ represent the same or different hydrogen atoms or straight-chain or branched, saturated or unsaturated $C_1$-$C_6$ aliphatic groups or phenyl groups or substituted phenyl groups having one or more substituents selected from straight-chain or branched, saturated or unsaturated $C_1$-$C_6$ aliphatic groups, in which n is an integer of at least 2, and M is a positive integer; and (b) at least one alkenyl-derivative of 2,2′,-dihydroxybiphenyl having the following general formula:

(3) 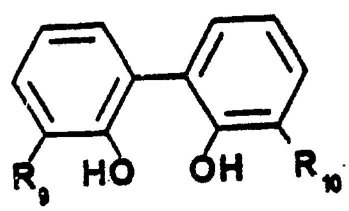 ,

where $R_9$-$R_{10}$ represent

$$-CH=CH-R',$$

$$-CH_2-CH=CH-R',$$

in which R′ denotes hydrogen atoms or $C_1$-$C_6$ alkyl groups.

Any polyfunctional maleimide compound known in the art may be suitable for use in this invention including, for example, those described in U.S. Patent Nos. 4,298,720; 4,035,345; 4,100,140; 4,608,426; 4,463,147; 4,389,516; 4,179,551; 3,627,780; and GB Patent No. 2054618A.

Specific examples of compounds of formula (1) include:

N,N′-4,4′-diphenylmethane-bis-maleimide,

N,N′-ethylene-bis-maleimide,

N,N′-ethylene-bis(2-methylmaleimide),

N,N′-trimethylene-bis-maleimide,

N,N′-tetramethylene-bis-maleimide,

N,N′-hexamethylene-bis-maleimide,
N,N′-1,4,-cyclohexylene-bis-maleimide,
N,N′-meta-phenylene-bis-maleimide,
N,N′-para-phenylene-bis-maleimide,
N,N′-2,4-toluene-bis-maleimide,
N,N′-2,6-toluene-bis-maleimide,
N,N′-4,4′-diphenylmethane-bis-maleimide,
N,N′-4,4′-3,3′-dichloro-diphenylmethane-bis-maleimide,
N,N′-4,4′-diphenyl-ether-bis-maleimide,
N,N′-4,4′-diphenylsulphone-bis-maleimide,
N,N′-4,-4′dicyclohexylmethane-bis-maleimide,
N,N′-α,α′-4,4′-dimethylenecyclohexane-bis-maleimide,
N,N′-meta-xylene-bis-maleimide,
N,N′-para-xylene-bis-maleimide,
N,N′-4,4′-diphenyl-cyclohexane-bis-maleimide,
N,N′-4,4′-2,2-diphenylpropane-bis-maleimide,
N,N′-4,4′-1,1-diphenylpropane-bis-maleimide,
N,N′-4,4′-triphenylmethane-bis-maleimide,
N,N′-α,α′-1,3-dipropylene-5,5-dimethyl-hydantoin-bis-maleimide,
N,N′-4,4′-(1,1,1-triphenyl ethane)-bis-maleimide,
N,N′-3,5-triazole-1,2,4-bis-maleimide,
N,N′-4,4′-diphenylmethane-bis-dimethyl-maleimide,
N,N′-4,4′-2,2,-diphenylpropane-bis-dimethylmaleimide,
N,N′-hexamethylene-bis-dimethyl-maleimide,
N,N′-4,4′-(diphenyl ether)-bis-dimethyl-maleimide,
N,N′-4,4′-diphenylsulphone-bis-dimethylmaleimide,
N,N′-(oxydi-para-phenylene)-bis-maleimide,
N,N′-(oxydi-para-phenylene)-bis-(2-methyl-maleimide),
N,N′-(methylenedi-para-phenylene)bis-maleimide,
N,N′-(methylenedi-para-phenylene)bis-(2-methylmaleimide),
N,N′-(methylenedi-para-phenylene)bis(2-phenylmaleimide),
N,N′-(sulfonyldi-para-phenylene)bis-maleimide,
N,N′-(thiodi-para-phenylene)bis-maleimide,
N,N′-(dithiodi-para-phenylene)bis-maleimide,
N,N′-(sulfonyldi-meta-phenylene)bis-maleimide,
N,N′-(ortho, para-isopropylidenediphenylene)bis-maleimide,
N,N′-(isopropylidenedi-para-phenylene)bis-maleimide,
N,N′-(ortho, para-cyclohexylidenediphenylene)bis-maleimide
N,N′-(cyclohexylidendi-para-phenylene)bis-maleimide,
N,N′-(ethylenedi-para-phenylene)bis-maleimide,
N,N′-(4,4′-para-triphenylene)bis-maleimide,
N,N′-(para-phenylenedioxydi-para-phenylene)bis-maleimide,
N,N′-(methylenedi-para-phenylene)bis-(2,3,-dichloromaleimide), and
N,N′-(oxydi-para-phenylene)bis(2-chloromaleimide).

Specific examples of compounds of formula (2) useful in accordance with this invention include polymethylene polyphenylene polymaleimides such as described in U.S. Patent No. 4,298,720 and GB Patent No. 2054618A.

While it is preferable to use N,N′-4,4′-diphenyl-methane-bis-maleimide in accordance with the thermosettable resin compositions of this invention, such compositions can comprise more than one type of polyfunctional maleimide compound as set forth above, and may comprise a mixture of several such compounds.

The alkenyl derivatives of 2,2′-dihydroxybiphenyl in accordance with the present invention can be prepared by first reacting 2,2′-dihydroxybiphenyl with an allyl halide, preferably allyl chloride or bromide, in the presence of a base, for example, an alkali metal hydroxide such as potassium or sodium hydroxide, and suitable solvents at temperatures ranging from about ambient to about 190° C. As is well known in the art, an alkenyl ether is formed accompanied by the elimination of an alkali metal halide (condensation). The alkenyl ethers can then be made to undergo rearrangement under heat application at temperatures ranging from about 170° C to about 200° C, (Claisen rearrangement) to form the alkenyl derivatives.

Specific examples of such alkenyl derivatives include 3,3′-diallyl-2,2′-dihydroxybiphenyl and 3,3′-dipropenyl-2,2′-dihydroxybiphenyl.

The following examples more fully illustrate the preparation of a preferred alkenyl derivative of 2,2′-dihydroxybiphenyl, as set forth above. It is to be understood, however, that the present invention is not intended to be limited in any way thereto.

## EXAMPLES I-II

3,3′-diallyl-2,2′-dihydroxybiphenyl is prepared according to the following examples.

In Example I, a mixture of 500 grams (2.685 mole) 2,2′-dihydroxybiphenyl, 698.5 grams of 45% potassium hydroxide solution and 1500 milliliters of acetone is stirred at about 40 °C for 30 minutes. To this mixture is then added 481 milliliters (5.91 mole) of allylchloride while stirring at 48 °C-50 °C for a period of approximately 24 hours. After extraction of the aqueous layer with water and decalin, and further washing the organic layer with sodium hydroxide and sodium chloride solution, 40 milliliters of toluene is added to the reaction flask and refluxed at 195 °C-200 °C for 4 to 5 hours to remove water azeotropically. Decalin is removed by vacuum distillation. The reaction mixture is then cooled and 3,3′-diallyl-2,2′ dihydroxybiphenyl is distilled at 180 °C/0.5 mm Hg to give 510 grams, (71 percent yield) of a yellow, slightly viscous liquid.

In Example II, a mixture of 500 grams (2.685 moles) 2,2′-dihydroxybiphenyl, 800 grams (5.788 mole) potassium bicarbonate, 1500 milliliters acetone and 850 milliliters (5.026 moles) allylbromide is stirred at 50 °C-60 °C for four days. After washing with water to remove inorganic salt, the organic layer is further washed with sodium hydroxide and then extracted with methylene chloride and washed with sodium chloride solution and dried. Acetone and methylene chloride is then distilled off, the reaction mixture cooled, and decalin is added to the mixture which is refluxed at 206 °C - 208 °C for about 24 hours. Decalin is then vacuum distilled off, and 3,3′-diallyl-2,2′-dihydroxybiphenyl is distilled at 180 °C/0.3 mm Hg to give 456 grams (64% yield) of a clear yellow, slightly viscous liquid.

In accordance with this invention, the alkenyl derivatives of 2,2′-dihydroxybiphenyl as set forth in formula (3) can be reacted with a polyfunctional maleimide compound as illustrated in formulas (1) and (2) above to produce a readily processible thermosettable resin composition, which in turn can be thermally cured to produce a thermoset resin matrix.

Generally, it is believed that the reaction mechanism of the aforementioned compounds can proceed through (1) a free radical type reaction, or (2) an ene type reaction, or (3) a diels-alder type reaction, depending, for example, on the position of unsaturation on the alkenyl derivative. Further, depending upon reaction conditions, subsequent diels-alder reactions may follow. It is to be understood, however, that the present invention is not intended to be limited in any way to such reactions, which of course, are well known, and can be represented as follows:

Reaction 1: FREE RADICAL TYPE REACTION

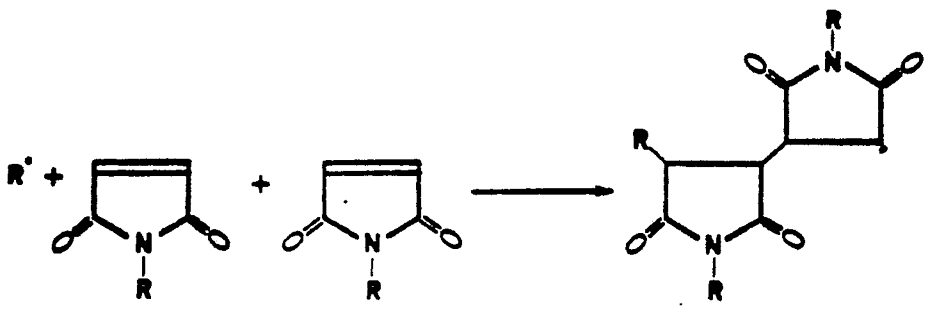

Reaction 2: ENE TYPE REACTION

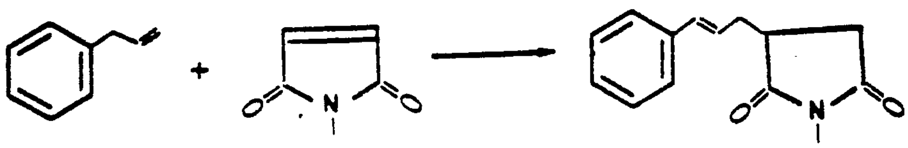

Reaction 3: DIELS-ALDER TYPE REACTION

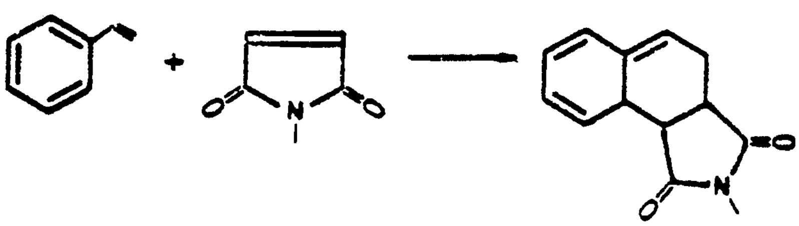

In preparing thermosettable resin compositions from reaction mixtures of polyfunctional maleimides and the alkenyl derivatives, such mixture compositions are subject to wide variation depending upon, for example, the particular polyfunctional maleimides and alkenyl derivatives employed therein, and the specific resin end uses contemplated. Accordingly, weight percent ratios of polyfunctional maleimide to alkenyl derivatives will range generally from about 0.5 to about 100, and preferably from about 0.5 to about 50, and most preferably from about 0.5 to about 3. Such resin compositions can be prepared at temperatures ranging from about ambient to about 270° C.

In preparing thermoset resin matrixes from the resin compositions of this invention, cure temperatures can range from about ambient to about 300° C over a time span from about 2 hours to in excess of 24 hours. A preferred curing schedule is as follows: 5 hours at 130° C, 2 hours at 180° C, 2 hours at 230° C and 5 hours at 250° C. A more preferable curing schedule is two hours at 180° C and five hours at 250° C.

Optionally, curing may be accomplished in an autoclave under pressure followed by a post cure according to schedules as set forth above. Of course, other curing schedules may be employed, again, depending upon the particular polyfunctional maleimide-alkenyl derivative mixture employed and specific resin end uses contemplated.

The polyfunctional maleimide components of this invention are typically provided to the thermosettable reaction mixture in a solvent free state, e.g., a solid form total maleimide-based resin. However, non-reactive solvents may be employed whereby the maleimide component can be used in the form of a solution. Examples of suitable solvents include, N-methyl-α-pyrrolidone, dimethylformamide, dimethylacetamide, dimethylsulfoxide, dioxane, acetone, methylethyl ketone, tetrahydrofuran, cellosolve, methyl acetate, ethyl

acetate, chloroform, benzene, toluene, xylene, chloro, dichloro and trichlorobenzene, tetramethyl urea, and the like.

Accordingly, the total uncured thermosettable resin composition of this invention, comprising a mixture of at least one polyfunctional maleimide compound and at least one alkenyl derivative, can be used in the form of a solution by dissolving the mixture in a solvent such as mentioned above.

Depending upon a particular application, any of the thermosettable resin compositions of this invention can be admixed with one or more additional components to modify the properties of the cured resin matrix end product, provided that such additives do not adversely affect cure. Examples of such components include inorganic fillers such as silica, silica glass, clay, aluminum hydroxide, asbestos, mica, gypsum, kaolin, cement, talc, calcium carbonate and the like. In similar fashion, catalysts, stabilizers, free radical initiators, tackifiers, antioxidants, plasticizers, pigments, dyestuffs, mold release agents and flame retardant compounds, may be added to the thermosettable resin compositions. Still further, other components which can be added to the resin compositions of this invention for various end use optimization include reactive rubbers and thermoplastics.

In still another embodiment of this invention terminally unsaturated oligomers, such as described in U.S. Patent Application, Serial No. 073,667, filed 15 July, 1987 and incorporated herein by reference, can be incorporated into the resin compositions of this invention to improve damage tolerance properties of the cured thermoset resin matrix.

The thermosettable resin compositions can be used as impregnating resin varnishes to coat continuous (filimentary) fibers such as carbon (graphite), for example, high-performance polyacrylonitrile (pan)-based carbon fibers and pitch-based carbon fibers, or, glass, boron, silica, ceramic, silicon carbide, aluminum oxide and other metal oxide fibers, polybenzimidazole, polyethylene, bicomponent polyethylene and polypropylene fibers, polyimide, or mixtures thereof to manufacture prepregs. In addition, fibers such as alumina-boria-silica, produced from a combination of the oxides of aluminum, boron and silicon and available from the Minnesota Mining and Manufacturing Company, PBZ, a family of heterocyclic rigid rod and chain extended polymers available from the Dow Chemical Company, and aramid (Kevlar) available from E. I. du Pont de Nemours and Company, Inc. may be coated with the resin compositions of this invention to manufacture prepregs.

The prepregs can comprise from about 20 to about 50 weight percent, preferably from about 25 to about 40 weight percent, of the thermosettable resin compositions of the instant invention, and from about 50 to about 80 weight percent, preferably from about 60 to about 75 weight percent, of continuous fibers such as mentioned above, of which high strength thermally stable fibers such as carbon, boron or glass are preferred. Such fibers can be coated with the thermosettable resin compositions as a hot melt or solution using any of the several processing conditions known in the art.

Composites comprising a multiplicity of continuous fibers can then be prepared from the prepregs by any method known in the art. For example, such composites can be prepared by stacking layer upon layer of the fiber prepregs, where applicable, in the same, angled or opposite direction to provide a mat or dispersion where applicable, of desired thickness and which are cured in stages as generally described herein. Curing is generally carried out at 180 °C for two hours under vacuum and about 80 psi, then at 230 °C for two hours under free standing conditions, then at 250 °C for five hours under free standing conditions. Of course, other curing schedules may be employed, depending upon the particular fibers employed in prepreg manufacture, and the specific composite end uses contemplated.

Examples of applications for fiber reinforced composites fabricated from prepregs comprising the thermosettable resin compositions of the instant invention include the manufacture of primary, secondary and empennage structures for both commercial and military aircraft. Such composites are also useful in other aerospace applications where there are demands for heat resistant products lighter in weight and longer lasting than basic materials such as metal, aluminum and titanium. Similarly, such composites may also be employed in the manufacture of products for the automobile and electronics industry. The wide spectrum of applications within which the invention herein may be useful will be readily apparent to those skilled in the art.

The following examples further illustrate the preparation of preferred thermoset resin matrixes of this invention from co-curable compositions comprising polyfunctional maleimide compounds and alkenyl derivatives of 2,2′-dihydroxybiphenyl. This invention, however, is not intended to be limited in any way thereto.

EXAMPLES III-IV

The following examples illustrate the preparation of thermosettable resin compositions of this invention and their corresponding cured resin matrixes, comprising mixtures of polyfunctional maleimides with 3,3′-diallyl- 2,2′-dihydroxybiphenyl (DAB), of which is prepared in Examples I and II.

In Example III, a mixture of 5 grams of Compamide H-353, a commercially available mixture of aminomaleimide, bis-maleimide, and chain extended maleimide from Technochemie GmbH Verfahrenstechnic and 3 grams DAB is heated to 80°C for 20 minutes to provide a homogeneous composition. The mixture is tacky at room temperature, and remains so in excess of several weeks. The mixture is then cured in a mold according to the following schedule: 5 hours at 130°C, 2 hours at 180°; 2 hours at 230°C; and 5 hours at 250°, to produce a plaque consisting of the cured thermoset resin matrix having a glass transition temperature (tg) of 280°C.

In Example IV, 52 grams of N,N′-4,4′-diphenylmethane-bis-maleimide is melted together with 34 grams of DAB at 130°C for one hour to provide a homogeneous mixture which is tacky at room temperature. The mixture is then cured according to the schedule set for the above to produce a plaque consisting of the cured thermoset resin matrix having a glass transition temperature of 310°C.

## Claims

1. A thermosettable resin composition comprising:

(a) at least one polyfunctional maleimide compound having the general formulas:

(1) 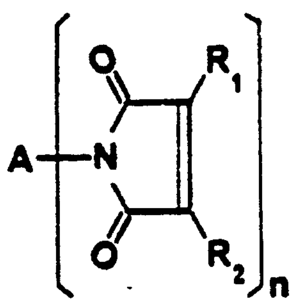 ,

(2) 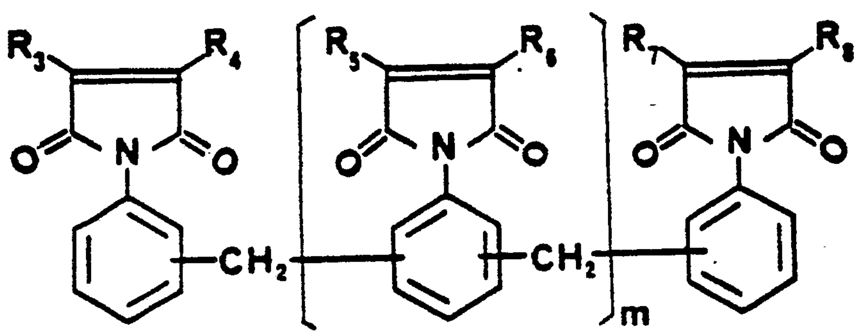 ,

where A represents a divalent, trivalent or tetravalent organic radical of at least two carbon atoms, or a direct bond, and $R_1$-$R_8$ represent the same or different hydrogen atoms, straight-chain or branched, saturated or unsaturated $C_{1-6}$ aliphatic groups, phenyl groups or substituted phenyl groups having one or more substituents selected from straight-chain or branched, saturated or unsaturated $C_1$-$C_6$ aliphatic groups, in which

n is an integer of at least 2, and

m is a positive integer; and

(b) at least one alkenyl derivarive of 2,2′-dihydroxybiphenyl having the general formula:

(3) 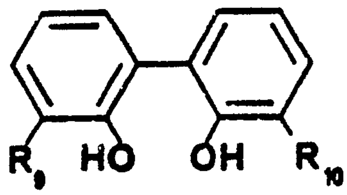 ,

where $R_9$-$R_{10}$ represent,

$$-CH{=}CH-R',$$

$$-CH_2-CH{=}CH-R',$$

in which R′ denotes hydrogen atoms or $C_1$-$C_6$ alkyl groups.

2. The composition as claimed in claim 1 wherein component (b) is 3,3′-diallyl-2,2′-dihydroxybiphenyl.

3. The composition as claimed in claim 1 wherein the weight percent ratio of polyfunctional maleimide to alkenyl derivative of 2,2′-dihydroxybiphenyl derivative ranges from about 0.5 to about 100.

4. A thermosettable resin composition comprising the reaction product of

(a) at least one polyfunctional maleimide compound having the general formula:

(1) 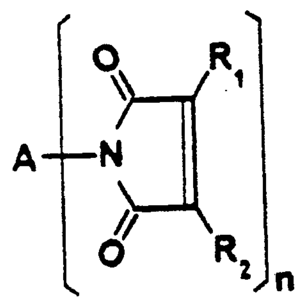 ,

(2) 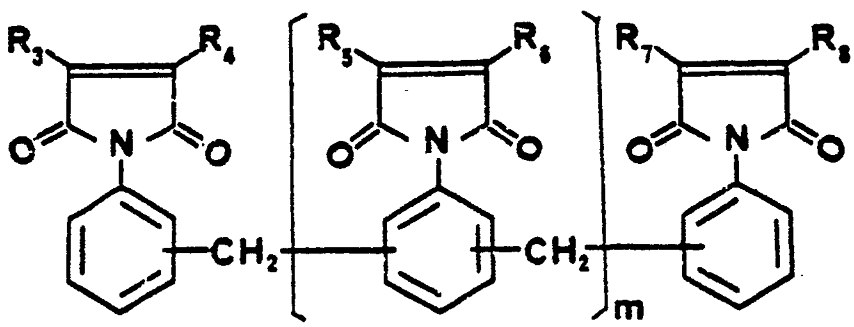 ,

where A represents a divalent, trivalent or tetravalent organic radical of at least two carbon atoms, or a direct bond, and $R_1$-$R_8$ represent the same or different hydrogen atoms, staight-chain or branched, saturated or unsaturated $C_1$-$C_6$ aliphatic groups, phenyl groups or substituted phenyl groups having one or more substituents selected from straight-chain or branched, saturated or unsaturated $C_1$-$C_6$ aliphatic groups, in which

n is an integer of at least 2, and

m is a positive integer; and

(b) at least one diallyldihydroxybiphenyl derivative having the general formula:

(3) 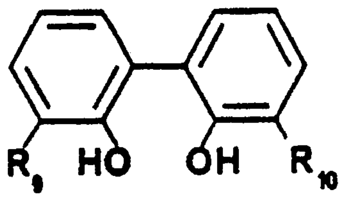 ,

where $R_9$-$R_{10}$ represent,

$$-CH=CH-R',$$

$$-CH_2-CH=CH-R',$$

in which R′ denotes hydrogen atoms or $C_1$-$C_6$ alkyl groups.

5. The thermosettable resin composition as claimed in claim 4 characterized in that it is an impregnating resin varnish.

6. A prepreg comprising about 20 to about 50 weight percent of the thermosettable resin composition of claim 4 and about 50 to about 80 weight percent of carbon fiber.

7. The prepreg as claimed in claim 6 wherein the carbon fiber is polyacrylonitrile-based carbon fiber.

8. A composite comprising a multiplicity of continuous fibers and a resin matrix wherein the matrix comprises a thermosettable resin composition as claimed in claim 4.

9. A process for the manufacture of a thermosettable resin composition comprising, reacting at a temperature of from about ambient to about 270° C,

(a) at least one polyfunctional maleimide compound having the general formulas;

(1) 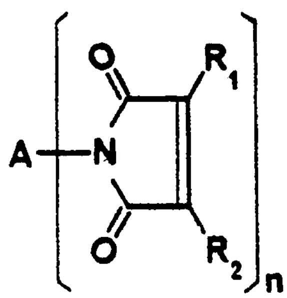 ,

(2) 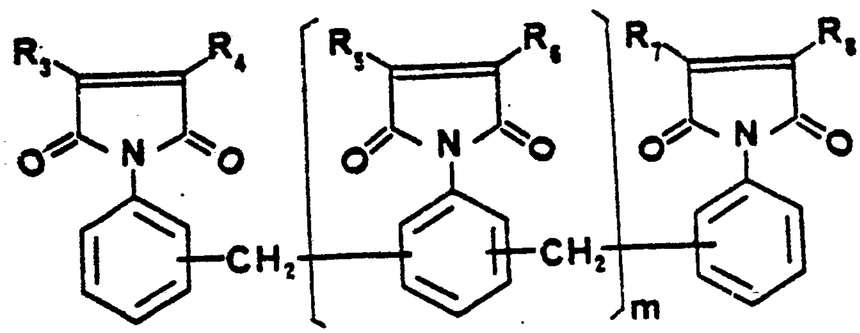 ,

where A represents a divalent, trivalent or tetravalent organic radical of at least two carbon atoms, or a direct bond, and $R_1$-$R_8$ represent the same or different hydrogen atoms, straight-chain or branched, saturated or unsaturated $C_1$-$C_6$ aliphatic groups, phenyl groups or substituted phenyl groups having one or more substituents selected from straight-chain or branched, saturated or unsaturated $C_1$-$C_6$ aliphatic groups, in which
n is an integer of at least 2, and
m is a positive integer; and
(b) at least one alkenyl derivative of 2,2′-dihydroxybiphenyl having the general formula:

(3) 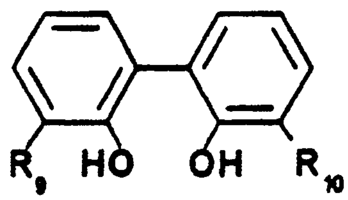 ,

where $R_9$-$R_{10}$ represent,

$$-CH=CH-R',$$

$$-CH_2-CH=CH-R',$$

in which R′ denotes hydrogen atoms or $C_1$-$C_6$ alkyl groups.

10. An alkenyl derivative of 2,2′-dihydroxybiphenyl having the following formula:

(3) 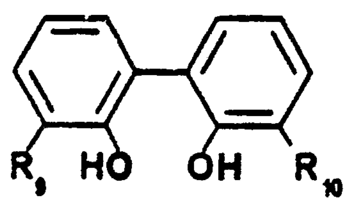 ,

where $R_9$-$R_{10}$ represent,

$$-CH=CH-R',$$

$$-CH_2-CH=CH-R',$$

in which R′ denotes hydrogen atoms or $C_1$-$C_6$ alkyl groups.

Claims for the following contracting State: ES

1. A process for producing a thermosettable resin composition characterized by mixing
(a) at least one polyfunctional maleimide compound having the general formulas:

(1) 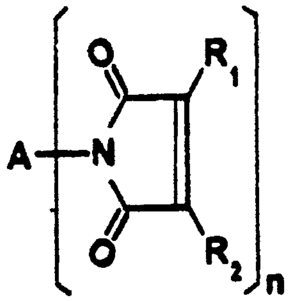 ,

(2) 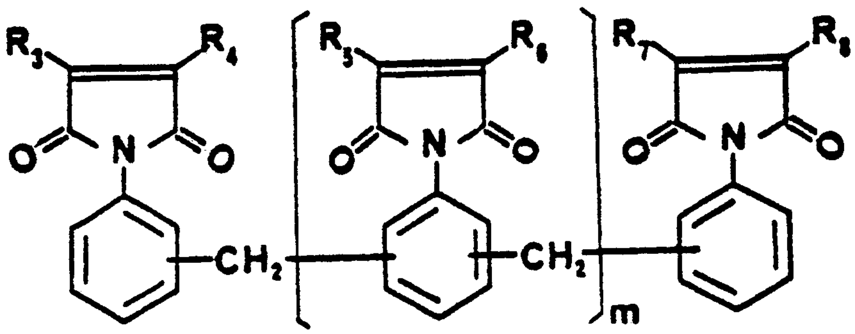 ,

where A represents a divalent, trivalent or tetravalent organic radical of at least two carbon atoms, or a direct bond, and $R_1$-$R_8$ represent the same or different hydrogen atoms, straight-chain or branched, saturated or unsaturated $C_{1-6}$ aliphatic groups, phenyl groups or substituted phenyl groups having one or more substituents selected from straight-chain or branched, saturated or unsaturated $C_1$-$C_6$ aliphatic groups. in which

n is an integer of at least 2, and

m is a positive integer; and

(b) at least one alkenyl derivative of 2,2′-dihydroxybiphenyl having the general formula:

(3) 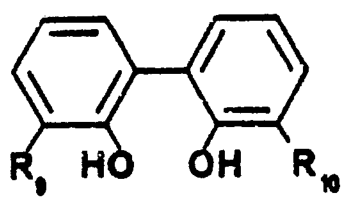 ,

where $R_9$-$R_{10}$ represent,

$$-CH=CH-R',$$

$$-CH_2-CH=CH-R',$$

in which R′ denotes hydrogen atoms or $C_1$-$C_6$ alkyl groups.

2. The process as claimed in claim 1 wherein component (b) is 3,3′-diallyl-2,2′-dihydroxybiphenyl.

3. The process as claimed in claim 1 wherein the weight percent ratio of polyfunctional maleimide to alkenyl derivative of 2,2′-dihydroxybiphenyl derivative ranges from about 0.5 to about 100.

4. A process for the manufacture of a thermosettable resin composition comprising, reacting at a temperature of from about ambient to about 270 °C,

(a) at least one polyfunctional maleimide compound having the general formulas;

(1) 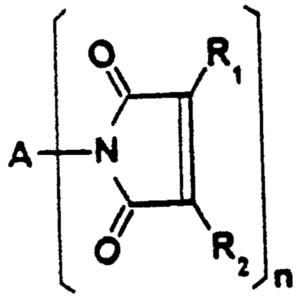 ,

(2) 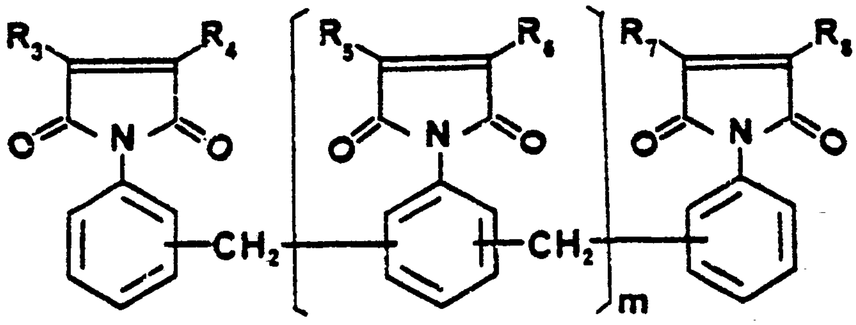 ,

where A represents a divalent, trivalent or tetravalent organic radical of at least two carbon atoms, or a direct bond, and $R_1$-$R_8$ represent the same or different hydrogen atoms, straight-chain or branched, saturated or unsaturated $C_1$-$C_6$ aliphatic groups, phenyl groups or substituted phenyl groups having one or more substituents selected from straight-chain or branched, saturated or unsaturated $C_1$-$C_6$ aliphatic groups, in which
n is an integer of at least 2, and
m is a positive integer; and

(b) at least one alkenyl derivative of 2,2′-dihydroxybiphenyl having the general formula:

(3) 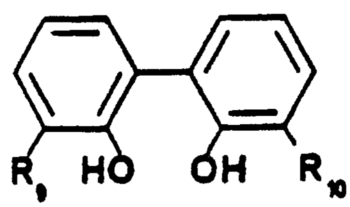 ,

where $R_9$-$R_{10}$ represent,

$$-CH=CH-R',$$

$$-CH_2-CH=CH-R',$$

in which R′ denotes hydrogen atoms or $C_1$-$C_6$ alkyl groups.

5. The process as claimed in claim 4 characterized in that an impregnating resin varnish is produced.

6. A process according to claim 4 characterized in that to about 20 to about 50 weight percent of the thermosettable resin composition about 50 to about 80 weight percent of carbon fiber are added in order to produce a prepreg.

7. The process as claimed in claim 6 wherein the carbon fiber is polyacrylonitrile-based carbon fiber.

8. A process for producing a composite comprising a multiplicity of continous fibers and a resin matrix characterised in that the matrix comprises a thermosettable resin composition as claimed in claim 4.

9. A process for producing
an alkenyl derivative of 2,2′-dihydroxybiphenyl having the following formula:

(3) 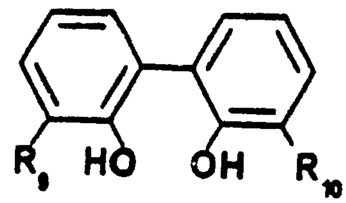 ,

where $R_9$-$R_{10}$ represent,

$$-CH{=}CH-R',$$

$$-CH_2-CH{=}CH-R',$$

in which R′ denotes hydrogen atoms or $C_1$-$C_6$ alkyl groups characterized by first reacting 2,2′-dihydroxybiphenyl with an allyl halide, preferably allyl chloride or bromide, in the presence of a base, for example; an alkali metal hydroxide such as potassium or sodium hydroxide, and suitable solvents at temperatures ranging from about ambient to about 190 °C and subsequent heat application at temperatures ranging from about 170 °C to about 200 °C, (Claisen rearrangment) to form the alkenyl derivatives.

European Patent Office

# EUROPEAN SEARCH REPORT

Application Number

EP 88 11 9705

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 014 816 (CIBA-GEIGY)<br>* Claims 1,4,5; page 10, lines 1-8; page 11, lines 24-35 *<br>--- | 1-9 | C 08 F 222/40<br>C 08 G 73/12<br>C 08 F 212/34 |
| X | EP-A-0 237 468 (CIBA-GEIGY)<br>* Claims 1,5; page 34, lines 5-14 *<br>----- | 1-9 | |
| | | | TECHNICAL FIELDS SEARCHED (Int. Cl.4) |
| | | | C 08 F<br>C 08 G |

The present search report has been drawn up for all claims

| Place of search | Date of completion of the search | Examiner |
|---|---|---|
| THE HAGUE | 09-03-1989 | CAUWENBERG C.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)